## Europäisches Patentamt
## European Patent Office
## Office européen des brevets

(11) Numéro de publication: **0 200 606**
**B1**

(12) **FASCICULE DE BREVET EUROPEEN**

(45) Date de publication du fascicule du brevet:
**22.06.88**

(21) Numéro de dépôt: **86400719.0**

(22) Date de dépôt: **03.04.86**

(51) Int. Cl.⁴: **B 29 C  53/80,** B 65 H  57/16,
D 03 D  3/06

(54) **Procédé de fabrication d'objets constitués d'une matrice organique renforcée de fibres, par bobinage desdites fibres sur un support et dispositif de mise en oeuvre de ce procédé.**

(30) Priorité: **03.04.85  FR 8505056**

(43) Date de publication de la demande:
**05.11.86 Bulletin 86/45**

(45) Mention de la délivrance du brevet:
**22.06.88 Bulletin 88/25**

(84) Etats contractants désignés:
**AT BE CH DE FR GB IT LI NL SE**

(56) Documents cités:
**WO - A - 84/00351**
**DE - C - 48 713**
**DE - C - 138 498**
**DE - C - 138 928**
**FR - A - 2 213 363**

(73) Titulaire: **VETROTEX SAINT-GOBAIN, 767 quai des Allobroges, F-73000 Chambéry (FR)**

(72) Inventeur: **Guillon, Daniel, 31, rue Jules Challier, F-73000 Chambery (FR)**
Inventeur: **Bricard, Alain, Les Hauts de Chamoux Bissy, F-73000 Chambery (FR)**

(74) Mandataire: **Breton, Jean-Claude et al, SAINT-GOBAIN RECHERCHE 39, quai Lucien Lefranc, F-93300 Aubervilliers Cedex (FR)**

## Description

L'invention est relative à un procédé et un dispositif pour la fabrication d'objets, formés de fibres continues, comme les fibres de verre, et de substances organiques telles que des résines synthétiques, obtenus par enroulement desdites fibres sur un support approprié (voir les préambules des revendications 1 et 4).

Les procédés et dispositifs de fabrication selon cette technique font appel, en général, à une installation qui comprend essentiellement un cantre de stockage, garni d'un certain nombre de bobines de fils ou de mèches obtenus par exemple par étirage de verre fondu selon des moyens mécaniques, un support susceptible d'être mis en rotation et une tête de distribution des fils ou des mèches, qui a pour rôle d'assurer la répartition de ceux-ci sur ledit support en rotation. Cette installation comprend également un certain nombre d'éléments de guidage des fils ou mèches issus des différentes bobines de manière, notamment, à les maintenir séparés sous forme d'au moins une nappe. Ces éléments de guidage peuvent aussi conférer une certaine tension à la nappe de fils ou de mèches, diriger ladite nappe vers un bac d'imprégnation de résine lorsque lesdits fils ou mèches n'ont pas été imprégnés de cette substance lors d'une opération préalable.

Selon la forme et les dimensions de l'objet à réaliser, la tête de distribution peut délivrer une seule mèche, formée de la réunion de plusieurs fils, ou une nappe de fils ou de mèches. Dans ce dernier cas, la tête de distribution a la structure d'un peigne muni de dents parallèles qui maintiennent la séparation des éléments constitutifs de la nappe pendant toute l'opération de bobinage sur le support en rotation.

Ce système de distribution des fibres sous forme de nappe ne pose pas de problème particulier, lorsque la largeur de la nappe déposée sur le support ne doit pas varier.

Lorsque la largeur de la nappe doit varier périodiquement au cours de son bobinage, pour respecter par exemple une forme donnée par un moule fixé sur le support en rotation, il est encore possible d'obtenir cette variation en faisant pivoter périodiquement le peigne de la tête de distribution. Cette possibilité est cependant très réduite car la rotation du peigne augmente la tension de la nappe en accentuant le frottement des fibres sur les dents dudit peigne. Cette augmentation de tension peut conduire à la rupture d'un certain nombre de fibres et nuire à la qualité de la pièce obtenue. D'autre part, l'expérience montre que cette rotation du peigne permet de resserrer une nappe de largeur L jusqu'à une largeur 0,5 L au maximum. Or, la réalisation de certaines pièces nécessite une réduction beaucoup plus importante de la largeur de nappe.

La demande de brevet WO-A-8 400 351 illustre bien la technique précitée et les variantes qui en découlent. Outre le peigne simple qui pivote autour d'un axe vertical dans le plan contenant la nappe de fils, ce document décrit un peigne en forme de compas s'ouvrant ou se fermant dans le même plan. Dans une autre variante, le peigne est constitué d'une série d'éléments reliés et articulés à leurs extrémités; la largeur de la nappe est modifiée en dépliant ou en repliant le peigne dans un mouvement d'accordéon.

La présente invention se propose de fournir des moyens permettant de faire varier périodiquement la largeur d'au moins une nappe de fils ou de mèches parallèles dans des proportions beaucoup plus importantes que celles qu'autorisent les moyens connus, sans nuire à la qualité de la pièce fabriquée.

L'invention a notamment pour but des moyens permettant d'adapter en permanence la largeur de la (ou des) nappe(s) à la section du moule en rotation.

Pour parvenir à ces résultats, l'invention consiste à prévoir un procédé et un dispositif selon les préambules des deux revendications indépendantes présentant les caractéristiques des parties caractérisantes de ces revendications. En particulier, l'invention consiste à déplacer périodiquement la nappe de fils (ou mèches) entre deux positions extrêmes A et B, selon un mouvement transversal à la direction d'avancement de ladite nappe et simultanément, à déplacer séparément chaque fil ou chaque groupe de fils dans un plan incliné par rapport au plan vertical parallèle aux fils selon un angle variant d'un plan à l'autre.

A cet effet, la nappe de fils passe à travers au moins un premier organe mobile de guidage, associé à un organe moteur, solidaire de la tête de distribution ou disposé à proximité de celle-ci.

L'organe moteur assure le déplacement de l'organe de guidage perpendiculairement à la direction de la nappe. Ce déplacement s'effectue selon un programme prédéterminé.

Les fils ou mèches passent également à travers un deuxième organe fixe de guidage formé par le peigne de la tête de distribution.

Ce peigne est constitué d'une série de tiges fixées à chacune de leurs extrémités, de telle sorte qu'un plan quelconque passant par une tige coupe toujours un plan quelconque passant par l'une des tiges qui lui est adjacente.

Des modes particuliers de développement du procédé ou de la réalisation du dispositif selon l'invention font l'objet des revendications dépendantes 2 à 3 et 5 à 10 respectivement.

L'invention est décrite de façon plus détaillée ci-après, en faisant référence aux planches de dessins dans lesquelles:

— les figures 1A, 1B et 1C sont des vues schématiques en plan de différents objets réalisables selon l'invention,

— la figure 2 est une coupe longitudinale schématique d'un mode de réalisation du dispositif muni de deux organes de guidage des fils,

— la figure 3 est une coupe transversale schématique du dispositif représenté figure 2,

— la figure 4 est une représentation schématique de l'implantation des extrémités des tiges formant l'un des organes de guidage représenté figures 2 et 3,

– la figure 5 est un schéma de différentes sections transversales de l'objet représenté à la figure 1B.

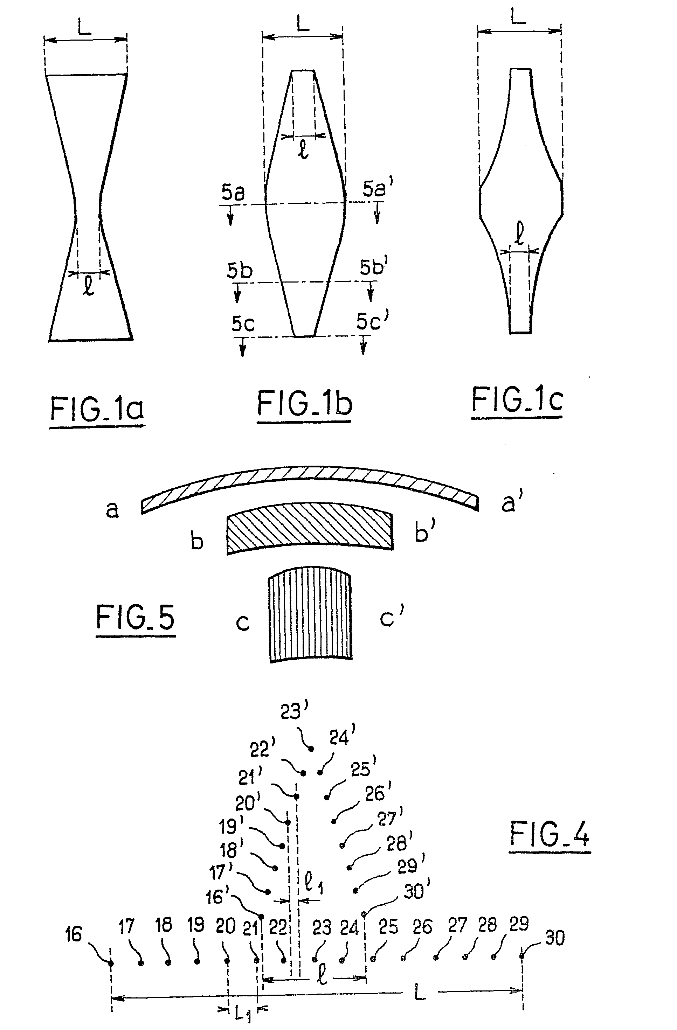

Les objets en matériau composite, constitué par exemple de fibres de verre continues et de résines synthétiques sont réalisés, selon l'invention, par bobinage de mèches sur un moule fixé sur un support en rotation, et peuvent prendre des formes très différentes ainsi que l'illustrent les figures 1A à 1C.

Les largeurs extrêmes l et L de ces objets peuvent, en particulier, varier dans de larges proportions. Ainsi, dans les exemples représentés, le rapport de ces largeurs est 1 à 4.

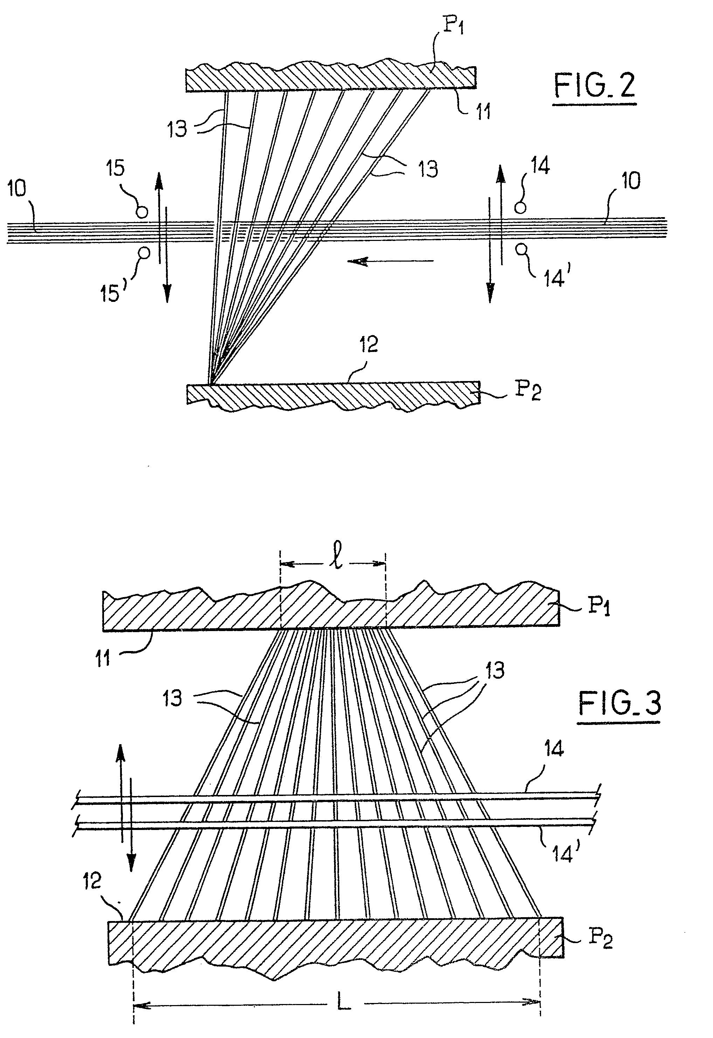

L'un quelconque des objets représentés peut être obtenu en utilisant une tête de distribution des fils telle que représentée aux figures 2 et 3, munie d'un peigne dont les dents sont implantées ainsi que le montre la figure 4.

Pour la réalisation de ces objets, on utilise par exemple des mèches de fils continus de verre, connus sous le nom «rovings», qui se présentent généralement sous forme de grosses pelotes cylindriques.

Ces pelotes, préalablement imprégnées ou non de résine synthétique, sont disposées sur un cantre non représenté; les différentes mèches issues de ces pelotes sont rassemblées par des moyens connus en soi pour former une nappe de fils parallèles 10. Cette nappe est dirigée vers la tête de distribution comprenant deux plaques $P_1$ et $P_2$, dont les faces en regard 11 et 12 sont parallèles et sur lesquelles sont fixées les extrémités d'une série de tiges 13.

En amont et en aval du peigne formé par les tiges 13, la nappe 10 passe en deux paires de barres 14, 14' et 15, 15'. Ces barres, parallèles entre elles, sont disposées de part et d'autre de la nappe 10, perpendiculairement à la direction de déplacement de ladite nappe matérialisée par une flèche.

Les extrémités des tiges 13, fixées sur la face 11 de la plaque $P_1$, sont implantées de telle manière que la projection orthogonale des distances séparant lesdites extrémités sur un plan perpendiculaire aux faces 11 et 12 est égale à la plus faible largeur 1 donnée à la nappe 10. La projection orthogonale sur le même plan que précédemment des distances séparant les extrémités des tiges 13, fixés sur la face 12 de la plaque $P_2$, est égale à la plus grande largeur L donnée à la nappe 10.

Ces deux largeurs extrêmes sont, pour le mode de réalisation représenté, dans un rapport de 1 à 4.

La figure 4 montre comment les tiges 13 sont fixées sur les plaques $P_1$ et $P_2$. Les différents points 16 à 30 correspondent aux projections orthogonales des extrémités des tiges 13, fixées sur la face 12, sur un plan parallèle aux faces 11 et 12. Les différents points 16' et 30' correspondent aux projections orthogonales des extrémités correspondantes, fixées sur la face 11, sur le même plan.

L'implantation des tiges 13 est donc tel que les différents plans passant par une tige coupent les différents plans passant par une tige adjacente à la première.

L'implantation des tiges 13 illustrée ici est régulière et symétrique. La projection orthogonale de la distance séparant les extrémités de deux tiges adjacentes, par exemple 20 et 21, sur un plan perpendiculaire aux faces 11 et 12 est régulièrement égal à $L_1$. De même, la projection orthogonale des extrémités correspondantes 20' et 21' sur le même plan est régulièrement égale à $l_1$.

La somme des projections $L_1$ est égale à la plus grande largeur L donnée à la nappe 10, et la somme des projections $l_1$ est sensiblement égale à la plus faible largeur l donnée à ladite nappe.

Il est bien évident que le passage de l à L et réciproquement peut être obtenu avec des tiges implantées de manière bien différente. Cette implantation peut être dissymétrique et/ou irrégulière dans la mesure où la caractéristique suivante est respectée: les plans contenant deux tiges adjacentes sont toujours sécants.

Il n'est pas nécessaire que les tiges soient toujours implantées de manière à ce que la projection orthogonale des distances séparant leurs extrémités, fixées sur une des plaques, soit égale à l. Ainsi, les tiges peuvent former un faisceau divergent à ces deux extrémités. Les projections orthogonales des distances séparant aussi bien les extrémités des tiges fixées sur $P_1$ que sur $P_2$ pourront alors être égales à L. Dans ce mode de réalisation, la valeur l sera obtenue dans deux positions voisines et symétriques par rapport à un plan médian, parallèle aux faces 11 et 12. Cette configuration du peigne permet de guider deux nappes séparément.

Le procédé consiste donc à bobiner une série de fils ou de groupes de fils sous forme de nappe 10 et, simultanément, à modifier la largeur de ladite nappe en la déplaçant périodiquement entre les faces 11 et 12 des plaques $P_1$ et $P_2$ grâce aux barres 14, 14' et 15, 15', ces dernières étant mues par un organe moteur non représenté. Dans ce cas, les positions extrêmes A et B entre lesquelles se déplace la nappe 10 correspondent aux faces 11 et 12.

Chaque paire de barres est solidaire d'un montant fixé à leurs extrémités, l'ensemble coulissant verticalement sur une paire de glissières non représentées.

Chaque paire de barre est animée d'un mouvement alternatif, représenté schématiquement par une double flèche sur les figures 2 et 3, asservi au mouvement de rotation du support. Ce mouvement est coordonné de manière à maintenir la portion de la nappe 10 comprise entre les deux paires de barres dans un plan parallèle aux faces 11 et 12.

Il est également possible d'utiliser une seule paire de barres, soit à la sortie, soit à l'entrée de la tête de distribution.

Le mouvement périodique de la (ou des) paire(s) de barres est programmé par tout moyen mécanique ou électronique connu. La programmation du déplacement des barres permet notamment d'ajuster en continu la largeur de la nappe déposée à la largeur en tout point de l'objet réalisé.

Toutes les sections transversales de l'objet ont évidemment une surface constante, mais elles peuvent présenter des formes en coupe bien différentes. La figure 5 montre les formes correspondant aux différentes coupes 5a–5a', 5b–5b', 5c–5c' de l'objet représenté à la figure 1B. La forme des flancs de l'objet est déterminée par les parois d'un moule fixé sur le support en rotation.

Lorsque la configuration du peigne permet de guider deux nappes dans deux plans différents, chaque nappe sera guidée séparément de l'autre par au moins une paire de barres. Le mouvement de chaque paire de barres pourra être asservi au mouvement de rotation du support de manière à ce que les nappes déposées présentent la même largeur à chaque instant. Ceci n'est évidemment possible que si le peigne demeure fixe par rapport aux nappes de fils.

L'invention permet de réaliser directement des pièces de structure telles que des éléments de suspension de véhicule automobile.

**Revendications**

1. Procédé de fabrication d'un produit composite constitué de fibres continues, telles que des fibres de verre, et d'une substance organique telle qu'une résine synthétique, selon lequel on bobine en continu lesdites fibres, se présentant sous forme de fils ou de mèches et disposés en au moins une nappe (10), sur un support animé d'un mouvement de rotation, et au cours duquel on modifie la largeur de la nappe (10), caractérisé en ce qu'on déplace alternativement l'ensemble des fils ou mèches qui la constituent entre deux positions extrêmes A et B selon un mouvement transversal à leur direction d'avancement et, simultanément, on déplace séparément chaque fil ou chaque mèche dans un plan incliné par rapport au plan vertical parallèle aux fils selon un angle variant d'un plan à l'autre.

2. Procédé de fabrication selon la revendication 1, caractérisé en ce qu'on augmente ou on diminue continûment la largeur de la nappe (10) lorsqu'elle est déplacée d'une des positions extrêmes à l'autre.

3. Procédé de fabrication selon l'une des revendications 1 ou 2, caractérisé en ce que la largeur de la nappe (10) déposée sur le support en rotation varie en permanence comme la largeur du produit composite désiré.

4. Dispositif de fabrication d'un produit composite, constitué de fibres continues, telles que des fibres de verre, et d'une substance organique, telle qu'un résine synthétique, comprenant des moyens de rassemblement et de guidage desdites fibres sous forme d'au moins une nappe de fils ou de groupes de fils, un support de bobinage et son moyen de mise en rotation et une tête de distribution de la nappe sur le support et, éventuellement, un moyen d'imprégnation desdits fils par ladite substance organique, caractérisé en ce qu'il comprend en combinaison au moins un organe mobile de guidage (14, 14'; 15, 15') de la nappe (10), solidaire de la tête de distribution ou disposé à proximité de celle-ci, un organe moteur qui déplace cet organe de guidage transversalement à la nappe (10), un organe fixe de guidage, solidaire de la tête de distribution, constitué d'une série de tiges (13) fixées à leurs extrémités, de sorte qu'un plan quelconque passant par une tige (13) coupe toujours un plan quelconque passant par l'une des tiges adjacentes à la première.

5. Dispositif selon la revendication 4, caractérisé en ce que l'organe mobile de guidage est constitué de deux barres (14, 14'; 15, 15') parallèles entre elles et disposées de part et d'autre de la nappe (10) de fils.

6. Dispositif selon la revendication 5, caractérisé en ce que les barres (14, 14'; 15, 15') sont solidaires à leurs extrémités d'un montant qui coulisse sur des glissières.

7. Dispositif selon l'une des revendications 5 et 6, caractérisé en ce que cet organe de guidage est installé à l'entrée et à la sortie de la tête de distribution de la nappe (10).

8. Dispositif selon la revendication 4, caractérisé en ce que les tiges (13) de l'organe fixe de guidage ont leur extrémités fixées sur les faces en regard de deux plaques parallèles ($P_1$, $P_2$).

9. Dispositif selon la revendication 8, caractérisé en ce que l'implantation des tiges (13) est telle que la projection orthogonale, sur un plan perpendiculaire à la nappe de fils, des distances séparant leurs extrémités fixées sur la plaque $P_1$ correspond à la plus faible largeur (l) de la nappe.

10. Dispositif selon l'une des revendications 8 et 9, caractérisé en ce que l'implantation des tiges (13) est telle que la projection orthogonale, sur un plan perpendiculaire à la nappe de fils, des distances séparant leurs extrémités fixées sur la plaque $P_2$ correspond à la plus grande largeur (L) de la nappe.

**Claims**

1. Method of manufacturing a composite product consisting of continous fibres, such as glass fibres and of an organic substance such as a synthetic resin, whereby the said fibres which are in the form of threads or tufts are coiled continuously and disposed on at least one sheet on a base operated by a rotational movement and during which the width of the sheet (10) is modified, characterised in that all the threads or tufts of which it is composed are displaced alternately between two extreme positions A and B according to a movement which is transversal to their direction of forward movement and simultaneously each thread or each tuft is moved separately in an inclined plane in relation to the vertical plane parallel to the threads according to an angle which varies from one plane to another.

2. Method of manufacture according to claim 1, characterised in that the width of the sheet (10) is continously increased or reduced when it is moved from one of the extreme positions to the other.

3. Method of manufacture according to one of claims 1 or 2, characterised in that the width of the sheet (10) deposited on the base in rotation varies permanently as the width of the desired composite product.

4. Device for manufacturing a composite product consisting of continuous fibres such as glass fibres and of an organic substance, such as synthetic resin, comprising means of grouping and guiding the said fibres in the form of at least a sheet of threads or of groups of threads, a winding base and its means of setting in rotation and a distribution head of the sheet on the base and where applicable a means of impregnating the said threads by the said organic substance, characterised in that it includes in combination at least a mobile guiding unit (14, 14'; 15, 15') of the sheet (10) which is integral with the distribution head or located near it, a motive unit which moves this guiding unit transversally to the sheet (10), a fixed guiding unit which is integral with the distribution head, consisting of a series of rods (13) fixed at their ends in such a way that any plane pasing through a rod (13) always cuts any plane passing through one of the rods adjacent to the first one.

5. Device according to claim 4, characterised in that the mobile guiding unit consists of two bars (14, 14'; 15, 15') which are parallel to each other and located on both sides of the sheet (10) of threads.

6. Device according to claim 5, characterised in that the bars (14, 14'; 15, 15') are integral at their ends with a post which is slid on slides.

7. Device according to one of claims 5 and 6, characterised in that this guiding unit is installed at the entry and exit of the distribution head of the sheet (10).

8. Device according to claim 4, characterised in that the ends of the rods (13) of the fixed guiding unit are fixed on faces opposite two parallel plates (P$_1$, P$_2$).

9. Device according to claim 8, characterised in that the fitting of the rods (13) is such that the orthogonal projection on a plane perpendicular to the sheet of threads with distances separating their ends fixed on plate P$_1$ corresponds to the smallest width (1) of the sheet.

10. Device according to one of claims 8 and 9, characterised in that the fitting of the rods (13) is such that the orthogonal projection on a plane which is perpendicular to the sheet of threads with distances separating their ends fixed on plate P$_2$ corresponds to the largest width (L) of the sheet.

**Patentansprüche**

1. Verfahren zur Herstellung eines Verbundkörpers aus kontinuierlichen Fasern, wie Glasfasern, und einer organischen Substanz, wie einem Kunstharz, bei dem die als Fäden oder Vorgarn vorliegenden und in wenigstens einem Faservlies (10) angeordneten Fasern auf einer in Drehung versetzten Aufnahme fortlaufend aufgespult werden und dabei die Breite des Faservlieses geändert wird, dadurch gekennzeichnet, dass die Anordnung aus Fäden oder Vorgarn zwischen zwei Endstellungen A und B in einer Bewegung quer zu ihrer Vorschubrichtung hin und her versetzt wird und gleichzeitig jeder Faden und jedes Vorgarn getrennt in einer Ebene verschoben wird, die bezüglich einer vertikalen, zu den Fäden parallelen Ebene in einem von der einen zu der anderen Ebene sich ändernden Winkel geneigt ist.

2. Herstellungsverfahren nach Anspruch 1, dadurch gekennzeichnet, dass die Breite des Faservlieses (10) während der Bewegung von einer der Endstellungen in die andere kontinuierlich vergrössert oder verkleinert wird.

3. Herstellungsverfahren nach Anspruch 1 oder 2, dadurch gekennzeichnet, dass die Breite des auf der in Drehung versetzten Aufnahme befindlichen Faservlieses (10) dauernd entsprechend der Breite des gewünschten Verbundkörpers geändert wird.

4. Vorrichtung zur Herstellung eines Verbundkörpers, bestehend aus fortlaufenden Fasern, wie Glasfasern, und einer organischen Substanz, wie einem Kunstharz, mit Einrichtungen zum Sammeln und Führen dieser Fasern in Form wenigstens eines Vlieses aus Fäden oder Fadengruppen, mit einer Wickelaufnahme und ihrer Dreheinrichtung und einem Verteilerkopf für das Vlies auf der Aufnahme, sowie gegebenenfalls mit einer Einrichtung zum Imprägnieren der Fäden mit der organischen Substanz, gekennzeichnet durch die Kombination aus wenigstens einem Führungsorgan (14, 14'; 15, 15') für das Vlies (10), das mit dem Verteilerkopf formschlüssig verbunden oder ihm benachbart ist, aus einem das Führungsorgan quer zum Vlies (10) verschiebenden Antriebsorgan, und aus einem festen, mit dem Verteilerkopf formschlüssig verbundenen Führungsorgan, bestehend aus einer Reihe von Stangen (13) die an ihren Enden derart festgemacht sind, dass jede durch eine Stange (13) verlaufende Ebene immer eine Ebene schneidet, die durch eine der, der ersten Stange benachbarten Stangen verläuft.

5. Vorrichtung nach Anspruch 4, dadurch gekennzeichnet, dass das bewegliche Führungsorgan aus zwei Schienen (14, 14'; 15, 15') besteht, die zueinander parallel und beiderseits des Faservlieses (10) angeordnet sind.

6. Vorrichtung nach Anspruch 5, dadurch gekennzeichnet, dass die Schienen (14, 14'; 15, 15') mit ihren Enden an einem Befestigungselement formschlüssig befestigt sind, das auf Führungsschienen gleitet.

7. Vorrichtung nach einem der Ansprüche 5 und 6, dadurch gekennzeichnet, dass das Führungsorgan am Einlauf und am Austritt des Verteilerkopfes des Faservlieses (10) eingebaut ist.

8. Vorrichtung nach Anspruch 4, dadurch gekennzeichnet, dass die Stangen (13) des festen Führungsorgans mit ihren Enden auf den Oberflächen von zwei parallelen Platten (P$_1$, P$_2$) befestigt wird.

9. Vorrichtung nach Anspruch 8, dadurch gekennzeichnet, dass der Einbau der Stangen (13) derart ist, dass die senkrechte Projektion der Abstände, die ihre auf der Platte P$_1$ befestigten Enden trennen, auf eine senkrecht zum Faservlies verlaufende Ebene der geringsten Breite (I) des Vlieses entspricht.

10. Vorrichtung nach einem der Ansprüche 8 und 9, dadurch gekennzeichnet, dass der Einbau der Stangen (13) derart ist, dass die senkrechte Projektion der Abstände, die ihre auf der Platte P$_2$ befestigten Enden trennen, auf eine Ebene senkrecht zum Faservlies der grössten Breite (L) des Vlieses entspricht.

FIG.1a

FIG.1b

FIG.1c

FIG.5

FIG.4

FIG. 2

FIG. 3